# EUROPÄISCHE PATENTANMELDUNG

(11) **EP 3 836 344 A1**
(43) Veröffentlichungstag der Anmeldung: **16.06.2021**
(21) Anmeldenummer: 20203047.4
(22) Anmeldetag: 21.10.2020
(51) Int. Cl.: H02J 7/34, H02M 1/00

(54) **ANORDNUNG UMFASSEND EINEN ELEKTRISCHEN VERBRAUCHER MIT SCHALTNETZTEIL**

(30) Priorität: 10.12.2019 DE 102019133626
(71) Anmelder: Insta GmbH, 58509 Lüdenscheid (DE)
(72) Erfinder: Krause, Karl-Heinz, 58809 Neuenrade (DE); Sangermann, Marc, 44229 Dortmund (DE); Neuhaus, Stefan, 44289 Dortmund (DE)

(57) **Zusammenfassung**

Offenbart ist eine Anordnung, umfassend einen in einen Stromkreis eingeschalteten ersten elektrischen Verbraucher 16 mit einem zu seiner Spannungsversorgung in den Stromkreis eingeschalteten, zyklisch Strom aufnehmenden Schaltnetzteil 17.

In Reihe mit dem ersten Verbraucher 16 ist ein Energieversorgungsmodul 1 zur Spannungsversorgung eines zweiten Verbrauchers geschaltet ist, welches Energieversorgungsmodul 1 ein Schaltelement 2, einen mit dem Schaltelement 2 und dem zweiten Verbraucher elektrisch verbundenen Energiespeicher 7 sowie eine zumindest eine den Energieinhalt des Energiespeichers 7 wiedergegebene Größe überwachende Messeinrichtung 8 aufweist, wobei die Messeinrichtung 8 mit einem Betätigungseingang des Schaltelementes 2 verbunden und dazu eingerichtet ist, das Schaltelement 2 zyklisch in einen nicht-leitenden Zustand zu schalten, wenn die zumindest eine Größe unterhalb eines Sollwertes ist und in einen leitenden Zustand zu schalten, wenn die zumindest eine Größe einen Sollwert erreicht, derart dass zu einem Teil der Zeitspanne, in der durch das Schaltnetzteil 17 des ersten Verbrauchers 16 der Stromkreis geschlossen ist, der Stromkreis durch das Schaltelement 2 unterbrochen ist.

Offenbart ist ferner ein diesbezügliches Energieversorgungsmodul sowie ein durch dasselbe durchgeführte Verfahren.

## Beschreibung

Die Erfindung betrifft eine Anordnung, umfassend einen in einen Stromkreis eingeschalteten ersten elektrischen Verbraucher mit einem zu seiner Spannungsversorgung in den Stromkreis eingeschalteten, zyklisch Strom aufnehmenden Schaltnetzteil. Die Erfindung betrifft zudem ein Energieversorgungsmodul für eine solche Anordnung sowie ein Verfahren zum Betreiben des Energieversorgungsmoduls.

Intelligente Aktoren benötigen für ihren Betrieb eine dauerhafte Spannungsversorgung. Dies gilt selbst dann, wenn die durch den Aktor durchzuführende Aktion aktuell nicht durchgeführt wird. Als Beispiel sind intelligente Leuchten zu nennen. Intelligente Leuchten können über eine Funk-Schnittstelle angesteuert werden. Für diese Funktion benötigt die intelligente Leuchte eine dauerhafte Spannungsversorgung, damit auch dann Befehle empfangen werden können, wenn die Leuchte als Aktor ausgeschaltet ist. Nur so ist eine ständige Überwachung der Funk-Schnittstelle möglich, damit auf an der Funk-Schnittstelle empfangene Befehle reagiert werden kann.

Zur dauerhaften Spannungsversorgung eines intelligenten Aktors ist dieser an ein Versorgungsnetz angeschlossen. In einem Gebäude ist dies typischerweise das Wechselspannungsnetz. Ein intelligenter Aktor ist daher an den L- und N-Leiter einer solchen Spannungsversorgung angeschlossen.

Bedient wird ein intelligenter Aktor beispielsweise über ein Bedienmodul, das mit einer Funk-Schnittstelle ausgestattet sein kann. Seitens dieses, von dem intelligenten Aktor unabhängig spannungsversorgten Funk-Bedienmoduls werden Befehle gesendet. Nach Empfang eines solchen Befehls reagiert der intelligente Aktor entsprechend. Eine tatsächliche elektrische Beeinflussung, mithin ein Schalten der Spannungsversorgung des intelligenten Aktors erfolgt seitens des Funk-Bedienmoduls daher nicht.

Zur Energieversorgung eines solchen als intelligenter Aktor ausgelegten Verbrauchers wird typischerweise ein Schaltnetzteil genutzt. Der Stromkreis, in den ein Schaltnetzteil eingeschaltet ist, wird durch das Schaltnetzteil zyklisch geschlossen und geöffnet. Dies erfolgt zur Energieaufnahme und Spannungswandlung für den Betrieb des Verbrauchers. Typischerweise sind Schaltnetzteile dazu ausgelegt, innerhalb einer Wechselspannungshalbwelle im Bereich des Maximums der Halbwelle nachzuladen.

Problematisch bei der Anforderung einer dauerhaften Spannungsversorgung eines intelligenten Aktors ist jedoch die konventionelle Verschaltung herkömmlicher Verbraucher in bestehenden Gebäuden. Diese Verbraucher werden über in die Spannungsversorgung eingeschaltete Schaltelemente ein- und ausgeschaltet, etwa durch einen Schalter oder Taster, mechanisch oder elektrisch angesteuert. Ein solches Schaltelement ist in Reihe mit dem anzusteuernden Aktor geschaltet, sodass durch eine Betätigung des Schaltelementes der in denselben Stromkreis eingeschaltete konventionelle Verbraucher (Aktor) mit Spannung versorgt wird. Die durch den konventionell angesteuerten Aktor durchzuführende Aktion wird dann ausgeführt. Soll diese beendet werden, wird die Spannungsversorgung durch das Schaltelement wieder unterbrochen. Gebäudeseitig liegen an der Position des konventionell anzusteuernden Aktors ein L- und ein N-Leiter an, wobei einer der beiden Leiter durch das Schaltelement geschaltet wird, typischerweise die Phase. Dieser Aufbau wird auch 2-Draht-Technik genannt.

Bei einem Austausch eines konventionellen Aktors durch einen dauerhaft mit Spannung zu versorgenden, insbesondere intelligenten Aktor wäre es wünschenswert, wenn die gewohnte haptische, als auch örtliche Bedienbarkeit entsprechend dem gewohnten herkömmlichen Schalter oder Taster erhalten bleiben könnte.

Für eine Ansteuerung eines solchen intelligenten Aktors als Ersatz eines herkömmlichen Aktors mit einem Bedienmodul, beispielsweise über Funk oder ein kabelgebundenes Protokoll, benötigt dieses Energie. Befindet es sich in einem Stromkreis mit einem über ein Schaltnetzteil energieversorgter Verbraucher, schaltet das Schaltnetzteil nur zeitweise in einen leitend-Zustand, sodass nur für die Zeitspanne, in dem dieser Zustand erhalten bleibt, ein Stromfluss zur Verfügung steht, der zur Energieversorgung des Bedienmoduls genutzt werden könnte. Eine Energieentnahme aus dem Stromfluss ist problematisch, da dann die Gefahr besteht, dass das Schaltnetzteil aufgrund zu geringer Energiezufuhr in einen undefinierten Ein-Aus-Wechsel-Zustand gebracht wird, sodass dann der daran angeschlossene Verbraucher nicht mehr korrekt arbeitet. Handelt es sich bei dem Verbraucher um eine Leuchte, fängt diese an zu flackern.

Vor diesem Hintergrund ist es Aufgabe der Erfindung, eine Anordnung vorzuschlagen, mit der sowohl ein erster, beispielsweise als intelligenter Aktor ausgelegter elektrischer Verbraucher dauerhaft mit Spannung versorgt als auch ein zweiter Verbraucher betrieben werden kann, wobei beide Verbraucher in Reihe geschaltet sind und eine Energieaufnahme durch das Bedienmodul den Betrieb des ersten elektrischen Verbrauchers nicht, jedenfalls nicht nennenswert beeinflusst. Aufgabe der Erfindung ist es ferner, ein Verfahren vorzuschlagen, mit dem diese Anordnung betrieben werden kann, sowie ein Energieversorgungsmodul für das Bedienmodul.

Gelöst wird die anordnungsbezogene Aufgabe durch eine eingangs genannte gattungsgemäße Anordnung, welche in dem Stromkreis elektrisch in Reihe mit dem ersten Verbraucher ein Energieversorgungsmodul zur Spannungsversorgung eines zweiten Verbrauchers geschaltet ist, welches Energieversorgungsmodul ein Schaltelement, einen mit dem Schaltelement und dem zweiten Verbraucher elektrisch verbundenen Energiespeicher sowie eine zumindest eine den Energieinhalt des Energiespeichers wiedergegebene Größe überwachende Messeinrichtung aufweist, wobei die Messeinrichtung mit einem Betätigungseingang des Schaltelementes verbunden und dazu eingerichtet ist, das Schaltelement zyklisch in einen nicht-leitenden Zustand zu schalten, wenn die zumindest eine Größe unterhalb eines Sollwertes ist und in einen leitenden Zustand zu schalten, wenn die zumindest eine Größe einen Sollwert erreicht, derart dass zu einem Teil der Zeitspanne, in der durch das Schaltnetzteil des ersten Verbrauchers der Stromkreis geschlossen ist, der Stromkreis durch das Schaltelement unterbrochen ist.

Um eindeutig zwischen dem dauerhaft mit Spannung zu versorgenden Verbraucher einerseits und dem erfindungsgemäßen Energieversorgungsmodul zugeordneten Verbraucher andererseits zu unterscheiden, sind nachfolgend ersterer als erster Verbraucher und letzterer als zweiter Verbraucher angesprochen.

Erfindungsgemäß ergibt sich zwischen dem Schaltnetzteil des ersten Verbrauchers und dem Energieversorgungsmodul eine kooperative Zusammenarbeit, ohne dass diese durch eine gemeinsame Instanz angesteuert werden. Dieses ermöglicht einen sehr einfachen schaltungstechnischen Aufbau. Hierzu passt sich das Energieversorgungsmodul mit seiner Energieentnahme an den Schaltzyklus des Schaltnetzteils des ersten Verbrauchers in geschickter Weise an, sodass die Spannungsversorgung des zweiten Verbrauchers und die Spannungsversorgung des ersten Verbrauchers, obwohl die Zeit der jeweiligen Spannungsversorgung durch das Schaltnetzteil des ersten Verbrauchers nur auf einen Halbwellenanteil begrenzt ist, gewährleistet ist. Dabei stellt die zeitweise Unterbrechung des Stromflusses durch das Schaltnetzteil des ersten Verbrauchers kein Problem dar. Ausgenutzt wird hierbei in geschickter Weise die Selbstregelung des Schaltnetzteils, dass dieses solange in seiner leitend-Stellung innerhalb einer Halbwelle geschaltet bleibt, bis genügend Energie aufgenommen ist.

Das vorgeschlagene Energieversorgungsmodul umfasst ein Schaltelement. Dieses ist vorzugsweise elektronisch ausgeführt und kann zwischen leitend und nicht-leitend unterscheiden. Dabei sind unter den Zuständen leitend bzw. nicht-leitend auch solche Zustände zu verstehen, die niedrig- bzw. hochohmig sind, wie sie etwa durch einen Transistor bereitgestellt werden.

Das Energieversorgungsmodul weist ferner einen Energiespeicher auf. Dieser Energiespeicher ist mit dem Schaltelement einerseits und dem zweiten Verbraucher andererseits elektrisch verbunden und dazu ausgelegt, je nach Schaltstellung des Schaltelementes mit Energie geladen zu werden. Durch den Energiespeicher wird der zweite Verbraucher mit Energie versorgt. Dabei ist der Energiespeicher so an das Schaltelement angeschlossen, dass ein Energiefluss nur vom Schaltelement zum Energiespeicher möglich ist. Dies kann beispielsweise durch eine oder mehrere Dioden erfolgen. Der Energiespeicher kann beispielsweise ein Kondensator sein, welcher parallel zu dem Schaltelement und zu dem zweiten Verbraucher geschaltet sein kann. Denkbar ist jedoch auch eine wiederaufladbare Batterie oder ein anderer elektrischer Energiespeicher. Durch den Energiespeicher ist der zweite Verbraucher energieversorgt, und zwar unabhängig davon, ob das Schaltelement durchgeschaltet ist oder nicht.

Das Energieversorgungsmodul umfasst ferner eine Messeinrichtung, mit der der Energieinhalt des Energiespeichers gemessen wird. Dies erfolgt anhand einer den Energieinhalt wiedergebenden Größe. Die Messung kann unmittelbar als auch mittelbar erfolgen. Unter einer mittelbaren Messung wird die Messung einer den Energieinhalt korrelierenden Größe verstanden. Im Falle eines Kondensators wird man typischerweise die Spannung messen. Mithin ist dann die Messeinrichtung als Spannungsmesseinrichtung ausgeführt. Aus der an dem Kondensator anliegenden Spannung kann mittelbar auf den Energieinhalt geschlossen werden. Denkbar ist auch, dass mehrere Größen gemessen, miteinander verknüpft werden und daraus der Energieinhalt berechnet wird. Hierdurch kann unter Umständen die Messgenauigkeit verbessert werden. Die Messeinrichtung ist mit einem Betätigungseingang des Schaltelementes verbunden. Ist das Schaltelement beispielsweise ein Transistor, ist die Messeinrichtung an die Basis des Schaltelementes angeschlossen.

Durch das Schaltnetzteil des ersten Verbrauchers ist der Stromkreis nur zeitweise - zyklisch - geschlossen, und zwar dann, wenn das Schaltnetzteil Strom aufnimmt. Nimmt das Schaltnetzteil keinen Strom auf, ist der Stromkreis unterbrochen. Handelt es sich bei dem Stromkreis um einen Wechselstromkreis, ist der Stromkreis nur für einen Teil einer Halbwelle geschlossen. Ein solches Schaltnetzteil ist ausgelegt, damit sein Energiespeicher weniger Energie speichert als durch eine Halbwelle einer Wechselspannung zur Verfügung gestellt ist.

Die Messeinrichtung ist dazu eingerichtet, zu Beginn eines Zyklus das Schaltelement in einen nicht-leitenden Zustand zu schalten. In diesem Zustand verbleibt das Energieversorgungsmodul, bis dass das Schaltnetzteil des ersten Verbrauchers den Stromkreis schließt und damit einen Stromfluss zulässt. Dann liegt an der durch das Schaltelement gebildeten Unterbrechung des Stromkreises eine Spannung an. Dies ist auch gegeben, wenn die Unterbrechung nur hochohmig ist, mithin keine vollständige elektrische Unterbrechung gegeben ist. Mittels der anliegenden Spannung wird der Energiespeicher bis zu einem Sollwert geladen. Erkennt die den Energiespeicher überwachende Messeinrichtung, dass ein Sollwert einer den Energieinhalt des Energiespeichers wiedergebende Größe erreicht ist, schaltet die Messeinrichtung das Schaltelement in einen leitend-Zustand. Dann wird der Energiespeicher nicht mehr bzw. nicht mehr nennenswert geladen. Der durch die Messeinrichtung überwachte Sollwert kann, wenn die Spannung der Halbwelle als Messgröße überwacht wird, so definiert sein, dass die Höhe der Spannung am Schaltnetzteil nicht beeinflusst ist. Dieses ist der Fall, wenn der Sollwert auf eine Spannung begrenzt ist, die kleiner als das Spannungsmaximum der Netzhalbwelle ist. In Anhängigkeit von der Größe des dem Energieversorgungsmodul zugeordneten Energiespeichers können bereits Spannungen von beispielsweise 20 bis 70 Volt ausreichen, bis dieser vollständig geladen ist.

Ist das Schaltelement des Energieversorgungsmoduls in seiner leitend-Stellung, arbeitet das Schaltnetzteil des ersten Verbrauchers genauso, als wäre es unmittelbar und somit ohne Zwischenschaltung des Energieversorgungsmoduls des zweiten Verbrauchers an eine dauerhafte Spannungsversorgung angeschlossen. Der Sollwert, bei dem die Messeinrichtung das Schaltelement erneut in seinen leitend-Zustand schaltet, ist dabei so dimensioniert, dass innerhalb des Zyklus der leitend-Stellung des Schaltnetzteils genügend Energie für die Versorgung des Schaltnetzteils verbleibt. In diesem Zusammenhang macht man sich den Umstand zu Nutze, dass das Schaltnetzteil in Abhängigkeit von der aufgenommenen Energie und nicht zeitabhängig schaltet.

Gemäß einer ersten Ausgestaltung wird bezüglich des Sollwertes auf den Zeitpunkt des Erreichens eines bestimmten Energieinhalts in dem Energiespeicher abgestellt. Dann wird der Stromkreis durch das Schaltelement des Energieversorgungsmoduls nur solange unterbrochen ist, bis der Energiespeicher bestimmungsgemäß, typischerweise vollständig geladen ist. Bei dieser Ausgestaltung ist die Energieaufnahme des Energieversorgungsmoduls typischerweise signifikant kleiner als diejenige, die für den bestimmungsgemäßen Betrieb des Schaltnetzteils benötigt wird.

Der Zyklus, zu dessen Beginn das Schaltelement des Energieversorgungsmoduls in einen nicht-leitenden Zustand geschaltet wird, entspricht, wenn das Energieversorgungsmodul in einer Wechselnetzspannung eingeschaltet ist, typischerweise einer Halbwelle. In einer vorteilhaften Ausgestaltung ist vorgesehen, dass der Beginn dieses Zyklus nahe oder auf dem Nulldurchgang der Wechselspannung liegt. Die Messeinrichtung ist bei einer solchen Ausgestaltung dazu eingerichtet, einen Nulldurchgang zu erkennen. Eine andere Möglichkeit ist, den Beginn des Zyklus auf den Wechsel des Schaltnetzteils-Zustands von leitend auf nicht-leitend zu setzen. Weist das Schaltelement einen ohmschen Widerstand auf, der typischerweise sehr gering, aber dennoch messbar ist, kann überwacht werden, bis wann über dem Schaltelement eine Spannung abfällt. Fällt keine oder nur eine sehr geringe Spannung über dem Schaltelement ab, bedeutet dies, dass das Schaltnetzteil in seinem nicht-leitend-Zustand ist. Mithin kann dann der Energiespeicher des Energieversorgungsmoduls nicht nachgeladen werden.

Um sicherzustellen, dass das Energieversorgungsmodul nicht über den gesamten Zyklus des Schaltnetzteils in seiner nicht-leitenden Stellung geschaltet ist, kann der Zeitraum in dem das Schaltelement in seiner nicht-leitenden Stellung geschaltet ist, auf einen Maximalwert begrenzt sein. Durch das Vorsehen eines zeitlichen Maximalwertes wird sichergestellt, dass die Funktionsweise des ersten Verbrauchers auf jeden Fall erhalten bleibt.

In einer bevorzugten Ausgestaltung ist der erste Verbraucher eine über eine Funkverbindung zu bedienende Leuchte als beispielhafter Aktor einer Gebäudeinstallation. Das Energieversorgungsmodul kann dann Teil eines die Leuchte ansteuernden Bedienmoduls sein, wobei die zum Betrieb des Bedienmoduls erforderliche Energie durch das Energieversorgungsmodul bereitgestellt wird. Das Bedienmodul verfügt bei einer solchen Auslegung über ein Funkmodul, mit dem die Leuchte angesteuert wird. Durch diese Anordnung wird eine Möglichkeit geschaffen, eine intelligente Leuchte zu bedienen, ohne dass die benötigte dauerhafte Spannungsversorgung derselben einzuschränken, wobei dennoch eine Energieversorgung für das Bedienmodul bereitgestellt ist. Die intelligente Leuchte kann an solchen Stellen mit dem vorgeschlagenen Energieversorgungsmodul eingesetzt werden, an denen eine konventionelle Leuchte in Verbindung mit einem die Spannungsversorgung der Leuchte schaltenden Schaltelementes vorgesehen war. Insofern kann eine herkömmliche Leuchte bzw. ein herkömmliches Leuchtmittel unter Verwendung derselben Lampenfassung durch eine smarte Leuchte ersetzt werden. Statt des den Stromkreis dauerhaft unterbrechenden konventionellen Schaltelementes wird ein Bedienmodul in die Unterputzdose des Schaltelementes eingesetzt. Das Schaltelement selbst bleibt erhalten und besorgt bei einer Betätigung, dass das Bedienmodul einen Ansteuerbefehl an die intelligente Leuchte über die Funkstrecke sendet. Die jedermann bekannte und intuitive Bedienung der Leuchte bleibt somit aufrechterhalten. Eine Bedienungsumgewöhnung ist nicht erforderlich.

Der verfahrensbezogene Anteil wird gelöst durch ein Verfahren zum Betreiben einer Anordnung, umfassend einen in einen Stromkreis eingeschalteten ersten elektrischen Verbraucher und ein in den Stromkreis eingeschaltetes Energieversorgungsmodul zur Spannungsversorgung eines zweiten Verbrauchers, wobei der erste Verbraucher zu seiner Spannungsversorgung ein in den Stromkreis eingeschaltetes Schaltnetzteil umfasst, durch das der durch den Stromkreis fließende Stromfluss zeitweise unterbrochen wird, wobei durch das Energieversorgungsmodul das nachstehende Verfahren zyklisch ausgeführt wird:
- Unterbrechen des Stromflusses in dem Stromkreis zum ersten elektrischen Verbraucher,
- Warten, bis eine Spannung an der Unterbrechung anliegt,
- Laden eines dem Energieversorgungsmodul zugehörigen Energiespeichers mittels der Spannung, die an der Unterbrechung anliegt,
- Überwachen zumindest einer den Energieinhalt des Energiespeichers wiedergebenden Größe und
wenn die zumindest eine Größe einen Sollwert erreicht hat:
- Aufheben der Unterbrechung des Stromflusses in dem Stromkreis zum ersten elektrischen Verbraucher und
- Versorgen des zweiten Verbrauchers mit der in dem Energiespeicher gespeicherten Energie.

Im ersten Schritt des Zyklus wird der Stromfluss in dem Stromkreis unterbrochen. Hierunter ist auch zu verstehen, dass der Innenwiderstand eines Schaltelementes geändert wird. Bei einem Transistor als Schaltelement bedeutet dieses zum Unterbrechen des Stromflusses ein Hochohmig-Schalten.

Ist der Stromkreis seitens des Energieversorgungsmoduls unterbrochen, wird gewartet, bis eine Spannung an der Unterbrechung anliegt. Dies ist dann der Fall, wenn das Schaltnetzteil in seine leitend-Stellung schaltet. Je nach Definition des Zyklusbeginns und in Abhängigkeit von der Auslegung des Schaltnetzteils des ersten Verbrauchers wird dieser Schritt obsolet, nämlich dann, wenn eine Spannung an der Unterbrechung sofort anliegt.

Liegt eine Spannung an der Unterbrechung an, wird ein dem Energieversorgungsmodul zugehöriger Energiespeicher mittels dieser Spannung geladen. Ist der Energiespeicher ausreichend geladen, wird die Unterbrechung des Stromflusses in den Stromkreis seitens des Energieversorgungsmoduls aufgehoben. Dieses wird durch eine Überwachung des Energieinhalts des Energiespeichers sichergestellt. Überwacht wird hierzu eine den Energieinhalt des Energiespeichers wiedergebende Größe, etwa eine zum Energieinhalt korrelierende Größe. Hierzu wird diese Größe gemessen und mit einem Sollwert verglichen. Der zweite Verbraucher ist typischerweise während des gesamten Zyklus spannungsversorgt.

Die Frequenz des Zyklus kann je nach speziellem Anwendungsfall variiert werden. Ist die in dem Stromkreis anliegende Spannungsversorgung eine Wechselspannung, wiederholt sich dieser Zyklus typischerweise jeder Halbwelle. Ein Zyklus kann sich auch über eine gesamte Welle erstrecken. Der Beginn des Zyklus ist vorteilhafterweise auf den Beginn einer Welle oder Halbwelle definiert. Eine Erkennung des Beginns einer Welle bzw. Halbwelle ist mit einfachen Mitteln möglich.

Die Erfindung wird nachfolgend unter Bezugnahme auf die Figuren anhand eines Ausführungsbeispiels beschrieben. Es zeigen:
- **Fig. 1:**: einen Schaltplan eines erfindungsgemäßen Energieversorgungsmoduls und
- **Fig. 2:**: ein Zeitdiagramm darstellend die Schaltzustände des energieversorgungsmodulseitigen Schaltelements sowie des Schaltnetzteils.

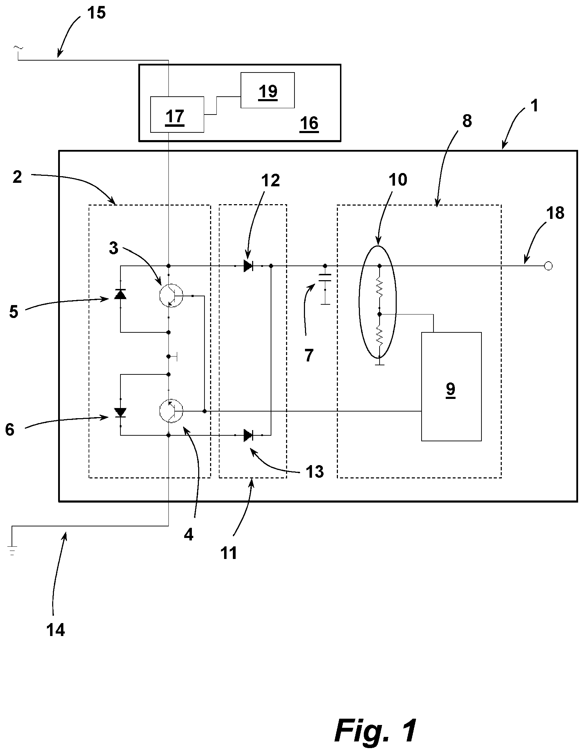

Figur 1 zeigt den Schaltungsaufbau eines Energieversorgungsmoduls 1 gemäß einem Ausführungsbeispiel der Erfindung. Das Energieversorgungsmodul 1 verfügt über ein Schaltelement 2. Das Schaltelement 2 umfasst in diesem Ausführungsbeispiel zwei gegensinnig geschaltete Transistoren 3, 4 sowie zwei zu diesen jeweils gegensinnig geschaltete Dioden 5, 6. Das Energieversorgungsmodul 1 verfügt ferner über einen Energiespeicher 7. Dieser ist in diesem Ausführungsbeispiel als Kondensator ausgebildet. Der Energiespeicher 7 ist parallel zu dem Schaltelement 2 des Energieversorgungsmoduls 1 geschaltet. Parallel zu dem Energiespeicher 7 ist eine Messeinrichtung 8 geschaltet. Diese umfasst eine Logik 9, mit der mit Hilfe eines Spannungsteilers 10 die Spannung über dem Energiespeicher 7 gemessen wird. Die Spannung ist in diesem Ausführungsbeispiel die den Energieinhalt des Energiespeichers 7 wiedergebende Größe. Die Spannung ist proportional zu dem Energieinhalt, korreliert mithin mit dem Energieinhalt. Das Energieversorgungsmodul 1 verfügt des Weiteren über eine Einrichtung 11, mit der ein direkter Stromfluss vom Energiespeicher 7 zum Schaltelement 2 verhindert wird. Diese Einrichtung 11 ist in diesem Ausführungsbeispiel durch Dioden 12, 13 realisiert. Das Energieversorgungsmodul 1 ist in einem Stromkreis, umfassend einen N-Leiter 14 (Neutralleiter) und einen L-Leiter 15 (Phase) eingeschaltet.

In Reihe zu dem Energieversorgungsmodul 1 ist ein Verbraucher 16 geschaltet, der über ein Schaltnetzteil 17 verfügt. Durch das Schaltnetzteil 17 ist der Stromfluss in dem Stromkreis nur zyklisch vorhanden, nämlich dann, wenn das Schaltnetzteil 17 Strom aufnimmt.

Das Energieversorgungsmodul 1 verfügt des Weiteren über einen Anschluss 18 zum Anschließen eines nicht näher dargestellten, mit Energie zu versorgenden zweiten Verbrauchers. Dieser zweite Verbraucher ist in diesem Ausführungsbeispiel ein zumindest ein Betätigungselement aufweisendes Funkmodul, mit dem der Aktor 19 des ersten Verbrauchers 16 angesteuert werden kann.

Die Logik 9 der Messeinrichtung 8 ist dazu eingerichtet, die Transistoren 3, 4 des Schaltelementes 2 zu Beginn eines Zyklus in einen nicht-leitenden Zustand zu schalten und, sobald der Energieinhalt im Energiespeicher 7 einen Sollwert erreicht hat, in eine leitend-Stellung zu schalten. Nicht-leitend und leitend ist in diesem Ausführungsbeispiel, bei dem das Schaltelement 2 durch die beiden Transistoren 3, 4 ausgeführt ist, als nieder- und hochohmig zu verstehen.

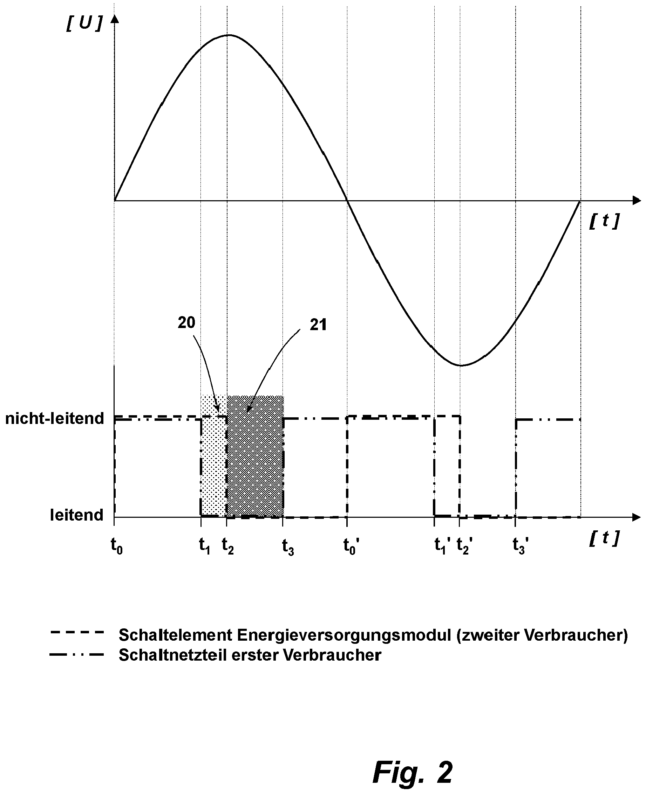

Unter Bezugnahme auf Figur 2 wird das in dem Energieversorgungsmodul 1 durchgeführte Verfahren in Verbindung mit dem ersten Verbraucher 16 und seinem zugehörigen Schaltnetzteil 17 erläutert. Im oberen Bereich der Figur 2 ist die an dem L-Leiter 15 gegenüber dem N-Leiter 14 anliegende Spannung über die Zeit aufgetragen. Im unteren Diagramm der Figur 2 sind die Schaltzustände des Schaltelementes 2 sowie des Schaltnetzteils 17 des ersten Verbrauchers 16 aufgezeigt. Die Zeitachsen des oberen und unteren Diagramms sind identisch.

In diesem Ausführungsbeispiel ist der Beginn des Zyklus, in dem das Energieversorgungsmodul 1 arbeitet, auf den Nulldurchgang der an dem L-Leiter 15 anliegenden Wechselspannung gesetzt. Dieser ist in Figur 2 mit to gekennzeichnet. Zu diesem Zeitpunkt steuert die Messeinrichtung 9 die Transistoren 3, 4 des Schaltelementes 2 so an, dass diese in eine nicht-leitende Stellung, mithin in ihren hochohmigen Schaltzustand gesetzt werden. Hierdurch wird der Stromkreis unterbrochen. Das Schaltnetzteil 16 des Verbrauchers 17 befindet sich zu diesem Zeitpunkt in einem nicht-leitenden Zustand.

Zum Zeitpunkt t₁ schaltet das Schaltnetzteil 17 des Verbrauchers 16 in einen leitenden, mithin einen niederohmigen Zustand. Dadurch, dass das Schaltnetzteil 17 einen Stromfluss zulässt, liegt an dem Schaltelement 2, welches, da nicht-leitend, eine Unterbrechung darstellt, eine Spannung an. Mit dieser Spannung wird der Energiespeicher 7 des Energieversorgungsmoduls 1 geladen. Erreicht der Energieinhalt des Energiespeichers 7 einen Sollwert, in diesem Ausführungsbeispiel eine Soll-Spannung, wird dies durch die diese Größe überwachende Messeinrichtung 9 erkannt. Die Messeinrichtung 9 schaltet daraufhin die Transistoren 3, 4 des Schaltelementes 2 in einen leitend-, mithin niederohmigen Zustand zum Zeitpunkt t₂. Während der Zeitdauer von t₁ bis t₂ - in Figur 2 hell gerastert und mit dem Bezugszeichen 20 gekennzeichnet - wird der Energiespeicher 7 mit der an dem Schaltelement 2 anliegenden Spannung geladen.

Hat die Messeinrichtung 9 die Transistoren 3, 4 des Schaltelementes 2 zum Zeitpunkt t₂ in eine leitend-Stellung gebracht, kann das Schaltnetzteil 17 des ersten Verbrauchers 16 unbeeinflusst von einem Laden des Energiespeichers 7 des Energieversorgungsmoduls 1 die benötigte Energie aus dem Stromkreis zu entnehmen. Diese Energieentnahme endet zum Zeitpunkt t₃, sodass im Zeitraum von t₂ bis t₃ - in Figur 2 dunkel gerastert und mit dem Bezugszeichen 21 gekennzeichnet - die Energieentnahme durch das Schaltnetzteil 17 erfolgt. Zum Zeitpunkt t₃ schaltet das Schaltnetzteil 17, da sein Energiespeicher geladen ist in einen nicht-leitenden Zustand. Für den Rest der Halbwelle erfolgt keine Energieentnahme aus dem Stromkreis. Der nächste Zyklus beginnt beim Zeitpunkt to' mithin beim Nulldurchgang der Spannung, die zwischen dem L-Leiter 15 und dem N-Leiter 14 anliegt.

Durch das so bereitgestellte Energieversorgungsmodul 1, welches das vorstehend beschriebene Verfahren durchführt, wird das an dem Anschluss 18 des Energieversorgungsmoduls 1 nicht näher dargestellte Funkmodul dauerhaft mit Spannung versorgt, sodass eine Bedienung des ersten Verbrauchers 16 mit seinem Aktor 19, hier einer intelligenten Leuchte, bedient werden kann. Von besonderem Vorteil ist, dass durch das vorgeschlagene Energieversorgungsmodul 1 ein solches bereitgestellt ist, welches problemlos in die Anschlussleitung des Schaltnetzteils 17 des ersten Verbrauchers 16 geschaltet werden kann, ohne dass eine Funktionseinschränkung desselben zu befürchten wäre. Wird das vorbeschriebene Verfahren in einem Wechselspannungsnetz innerhalb einer Welle oder Halbwelle zyklisch durchgeführt, kann der Energiespeicher 7 relativ klein und schnellladend ausgelegt sein.

Die Erfindung ist anhand eines Ausführungsbeispiels beschrieben worden. Ohne den Schutzbereich, beschrieben durch die geltenden Ansprüche, zu verlassen, ergeben sich für einen Fachmann zahlreiche weitere Ausgestaltungen den Erfindungsgedanken umzusetzen, ohne dass diese im Detail erläutert werden müssten.

### Bezugszeichenliste

- 1: Energieversorgungsmodul
- 2: Schaltelement
- 3,4: Transistor
- 5, 6, 12, 13: Diode
- 7: Energiespeicher
- 8: Messeinrichtung
- 9: Logik
- 10: Spannungsteiler
- 11: Einrichtung, mit der ein direkter Stromfluss vom Energiespeicher zum Schaltelement verhindert wird
- 14: N-Leiter (Neutralleiter)
- 15: L-Leiter (Phase)
- 16: erster Verbraucher
- 17: Schaltnetzteil
- 18: Anschluss für zweiten Verbraucher
- 19: Aktor
- 20: Zeitraum, in dem der Energiespeicher 7 geladen wird
- 21: Zeitraum, in dem das Schaltnetzteil 17 Energie aus dem Stromkreis entnimmt

## Patentansprüche

1. Anordnung, umfassend einen in einen Stromkreis eingeschalteten ersten elektrischen Verbraucher (16) mit einem zu seiner Spannungsversorgung in den Stromkreis eingeschalteten, zyklisch Strom aufnehmenden Schaltnetzteil (17), **dadurch gekennzeichnet, dass** in dem Stromkreis elektrisch in Reihe mit dem ersten Verbraucher (16) ein Energieversorgungsmodul (1) zur Spannungsversorgung eines zweiten Verbrauchers geschaltet ist, welches Energieversorgungsmodul (1) ein Schaltelement (2), einen mit dem Schaltelement (2) und dem zweiten Verbraucher elektrisch verbundenen Energiespeicher (7) sowie eine zumindest eine den Energieinhalt des Energiespeichers (7) wiedergegebene Größe überwachende Messeinrichtung (8) aufweist, wobei die Messeinrichtung (8) mit einem Betätigungseingang des Schaltelementes (2) verbunden und dazu eingerichtet ist, das Schaltelement (2) zyklisch in einen nicht-leitenden Zustand zu schalten, wenn die zumindest eine Größe unterhalb eines Sollwertes ist und in einen leitenden Zustand zu schalten, wenn die zumindest eine Größe einen Sollwert erreicht, derart dass zu einem Teil der Zeitspanne, in der durch das Schaltnetzteil (17) des ersten Verbrauchers (16) der Stromkreis geschlossen ist, der Stromkreis durch das Schaltelement (2) unterbrochen ist.

2. Anordnung nach Anspruch 1, **dadurch gekennzeichnet, dass** die Zeitspanne, in der das Schaltelement (2) in seiner nicht-leitenden Stellung geschaltet ist, auf einen Maximalwert begrenzt ist.

3. Anordnung nach einem der Ansprüche 1 oder 2, **dadurch gekennzeichnet, dass** der erste Verbraucher (16) eine über eine Funkverbindung zu bedienende Leuchte und das Energieversorgungsmodul (1) mit dem zweiten Verbraucher Teil eines Bedienmoduls sind, wobei der zweite Verbraucher ein die Leuchte ansteuerndes Funkmodul ist.

4. Anordnung nach einem der Ansprüche 1 bis 3, **dadurch gekennzeichnet, dass** das Schaltelement (2) ein oder mehrere Transistoren (3, 4) umfasst und die Messeinrichtung (8) mit der Basis des oder der Transistoren (3, 4) als Betätigungseingang elektrisch verbunden ist.

5. Anordnung nach einem der Ansprüche 1 bis 4, **dadurch gekennzeichnet, dass** der Energiespeicher (7) ein Kondensator ist.

6. Anordnung nach einem der Ansprüche 1 bis 5, **dadurch gekennzeichnet, dass** die Messeinrichtung (8) die Spannung, die über dem Energiespeicher (7) anliegt, als die den Energieinhalt des Energiespeichers (7) wiedergebende Größe misst.

7. Energieversorgungsmodul, einzuschalten in Reihe mit einem ersten Verbraucher (16) **dadurch gekennzeichnet, dass** das Energieversorgungsmodul (1) die dasselbe betreffenden Merkmale nach einem der Ansprüche 1 bis 6 aufweist.

8. Verfahren zum Betreiben einer Anordnung, umfassend einen in einen Stromkreis eingeschalteten ersten elektrischen Verbraucher (16) und ein in den Stromkreis eingeschaltetes Energieversorgungsmodul (1) zur Spannungsversorgung eines zweiten Verbrauchers, wobei der erste Verbraucher (16) zu seiner Spannungsversorgung ein in den Stromkreis eingeschaltetes Schaltnetzteil (17) umfasst, durch das der durch den Stromkreis fließende Stromfluss zeitweise unterbrochen wird, wobei durch das Energieversorgungsmodul (1) das nachstehende Verfahren zyklisch ausgeführt wird:
- Unterbrechen des Stromflusses in dem Stromkreis zum ersten elektrischen Verbraucher (16),
- Warten, bis eine Spannung an der Unterbrechung anliegt,
- Laden eines dem Energieversorgungsmodul (1) zugehörigen Energiespeichers (7) mittels der Spannung, die an der Unterbrechung anliegt,
- Überwachen zumindest einer den Energieinhalt des Energiespeichers (7) wiedergebenden Größe und
wenn die zumindest eine Größe einen Sollwert erreicht hat:
- Aufheben der Unterbrechung des Stromflusses in dem Stromkreis zum ersten elektrischen Verbraucher und
- Versorgen des zweiten Verbrauchers mit der in dem Energiespeicher (7) gespeicherten Energie.

9. Verfahren nach Anspruch 8, **dadurch gekennzeichnet, dass** in dem Stromkreis eine Wechselspannung anliegt und das Verfahren innerhalb jeder Welle oder Halbwelle durchgeführt wird.

10. Verfahren nach einem der Ansprüche 8 oder 9, **dadurch gekennzeichnet, dass**, wenn der Stromfluss in dem Stromkreis zum ersten elektrischen Verbraucher (16) unterbrochen wird, die Stromkreisunterbrechung hinsichtlich ihrer Dauer überwacht und die Unterbrechung aufgehoben wird, wenn eine vorgegebene maximale Unterbrechungszeitdauer erreicht ist.
